# EUROPÄISCHE PATENTSCHRIFT

(11) **EP 2 850 673 B1**
(45) Veröffentlichungstag und Bekanntmachung des Hinweises auf die Patenterteilung: **04.04.2018**
(21) Anmeldenummer: 13722446.5
(22) Anmeldetag: 14.05.2013
(51) Int. Cl.: H01M 10/613, H01M 10/625, H01M 10/6556, F28F 9/007, F28F 1/02

(54) **KÜHLVORRICHTUNG FÜR EINE FAHRZEUGBATTERIE, FAHRZEUGBATTERIEBAUGRUPPE UND VERFAHREN ZUR HERSTELLUNG EINER KÜHLVORRICHTUNG**
COOLING DEVICE FOR A VEHICLE BATTERY, VEHICLE BATTERY ASSEMBLY, AND METHOD FOR PRODUCING A COOLING DEVICE
DISPOSITIF DE REFROIDISSEMENT POUR BATTERIE DE VÉHICULE, MODULE BATTERIE DE VÉHICULE ET PROCÉDÉ DE PRODUCTION D'UN DISPOSITIF DE REFROIDISSEMENT

(30) Priorität: 18.05.2012 DE 102012009889
(43) Veröffentlichungstag der Anmeldung: 25.03.2015
(73) Patentinhaber: Bayerische Motoren Werke Aktiengesellschaft, 80809 München (DE)
(72) Erfinder: DIRMEIER, Micha, 80809 München (DE); MORTON, David Jakob, 70191 Stuttgart (DE); WEILEDER, Stephan, 80333 München (DE)
(86) Internationale Anmeldenummer: PCT/EP2013/059929
(87) Internationale Veröffentlichungsnummer: WO 2013/171205

(56) Entgegenhaltungen:
- DE-A1-102008 059 966
- DE-A1-102010 032 898
- DE-A1-102010 038 681
- US-A1- 2002 198 464
- US-B2- 6 858 344

## Beschreibung

Die Erfindung betrifft eine Kühlvorrichtung für eine Fahrzeugbatterie mit zumindest einer Kühlmittelleitung und zumindest einem separaten Anpresselement, welches elastisch ausgebildet ist, um die Kühlmittelleitung gegen eine Außenseite, vorzugsweise Flachseite, der Fahrzeugbatterie zu pressen. Die Erfindung betrifft ferner eine Fahrzeugbatteriebaugruppe mit einer derartigen Kühlvorrichtung sowie ein Verfahren zur Herstellung einer derartigen Kühlvorrichtung.

Eine gattungsgemäße Kühlvorrichtung ist beispielsweise aus der US2011132580 bekannt. Das Anpresselement ist ein Spannrahmen aus Metall, der mit der Kühlmittelleitung verschraubt ist und ein elektrisches Element der Fahrzeugbatterie über Federglieder gegen die Kühlmittelleitung drückt. Derartige Anpresselemente haben ein hohes Gewicht und erfordern eine komplexe Montage an der Fahrzeugbatterie, insbesondere bei einer Vielzahl von elektrischen Elementen. Der metallische Spannrahmen kann als Wärmebrücke wirken und auf diese Weise die effektive Kühlleistung der Kühlvorrichtung reduzieren.

Aus der DE 10 2010 032 898 A1 ist ebenfalls eine gattungsgemäße Kühlvorrichtung bekannt, die ein elastisches Anpresselement aus einem Kunststoff und ein Wärmeisolierungsbauteil umfasst, wobei das Anpresselement einen Aufnahmeabschnitt aufweist, der eine Kühlmittelleitung aufnimmt.

Aufgabe der Erfindung ist es, eine Kühlvorrichtung mit geringem Gewicht und einem Anpresselement, welches gute und langlebige elastische Eigenschaften aufweist, zu schaffen, welche einfach und kostengünstig herstellbar ist.

Die Aufgabe der Erfindung wird durch eine gattungsgemäße Kühlvorrichtung gelöst, wobei das Anpresselement als Verbundbauteil ausgebildet ist, welches ein separat hergestelltes Verstärkungsbauteil aufweist, das von einem Kunststoffmaterial derart umgeben ist, dass das Kunststoffmaterial den Aufnahmeabschnitt bildet. Durch die Verwendung eines Kunststoffmaterials können das Gewicht der Kühlvorrichtung sowie deren Herstellungskosten reduziert werden. Die Verbundbauweise mit Verstärkungsbauteil ermöglicht verbesserte mechanische Eigenschaften, insbesondere in Bezug auf Stabilität, Elastizität und Langlebigkeit. Durch die Ausbildung als Verbundbauteil mit einem separat hergestellten Verstärkungsbauteil kann ein langlebiges Anpresselement durch einfache Herstellungsverfahren, beispielsweise durch Umspritzen des Verstärkungsbauteils hergestellt werden. Das Kunststoffmaterial des Anpresselements ermöglicht insbesondere eine Ausbildung des Anpresselements mit geringer Wärmeleitfähigkeit.

Die Kühlmittelleitung liegt gemäß der bevorzugten Ausführungsform direkt an der Batterie an.

Insbesondere weist das das Verstärkungsbauteil umgebende Kunststoffmaterial eine geringere Wärmeleitfähigkeit auf als das Verstärkungsbauteil. Auf diese Weise wird eine ungewünschte Wärmeübertragung bei der Kühlvorrichtung vermieden.

Ein besonders langlebiges und kompaktes Verstärkungsbauteil kann realisiert werden, indem das Verstärkungsbauteil aus Metall ist.

Beispielsweise ist das metallische Verstärkungsbauteil ein Metallblech, welches vorzugsweise im entspannten Zustand eine bogenförmige Gestalt hat. Ein Metallblech kann auf einfache Weise durch Stanzen und Umformen in vielfältigen Gestalten hergestellt werden.

Um langlebige elastische Eigenschaften des Anpresselements zu erreichen, kann das metallische Verstärkungsbauteil ein federelastisches Metallbauteil sein, vorzugsweise aus Federstahl oder einer elastischen Aluminiumlegierung.

Es ist möglich, dass das Anpresselement zumindest einen durch das vom Kunststoffmaterial umgebene Verstärkungsbauteil gebildeten federelastischen Schenkel aufweist. Vorzugsweise sind zwei federelastische Abschnitte vorgesehen, welche jeweils Schenkel des Anpresselements bilden.

Eine geringe Bauhöhe und gute Federeigenschaften können realisiert werden, indem der federelastische Schenkel in einem flachen Winkel zur gekühlten Außenseite der Fahrzeugbatterie ausgebildet ist. Beispielsweise kann der federelastische Schenkel in einem Winkel kleiner 45° angeordnet sein.

Die federelastischen Schenkel können Bereiche mit heterogenem Widerstandsmoment aufweisen, um bei Belastung eine gleichmäßigere Verformung des federelastischen Abschnitts zu bewirken. Somit wird eine lokale Überbelastung der federelastischen Schenkel verhindert und die Lebensdauer des Anpresselements verlängert.

Zur Ausbildung von Bereichen mit unterschiedlichem Widerstandsmoment kann das Verstärkungsbauteil beispielsweise bezüglich seines Querschnittsverlaufs heterogen ausgebildet sein und/oder Bereiche unterschiedlich dicker Kunststoffumspritzung sind vorgesehen. Dies ermöglicht einen Ausgleich zwischen verschiedenen Belastungszonen und ermöglicht vorzugsweise eine gleichförmige Verformung bei Belastung des Anpresselements.

Das Anpresselement weist zumindest einen Aufnahmeabschnitt auf, der die Kühlmittelleitung aufnimmt. Der Aufnahmeabschnitt ermöglicht insbesondere eine Positionierung der Kühlmittelleitung und ein gutes Anpressen gegen die zu kühlende Außenseite der Fahrzeugbatterie. Der Aufnahmeabschnitt kann vorzugsweise eine Anbringung der Kühlmittelleitung am Anpresselement in einem vormontierten Zustand ermöglichen.

Vorzugsweise ist die Kühlmittelleitung flach und mit einer im Wesentlichen zur angrenzenden Außenseite der Fahrzeugbatterie komplementären Oberseite ausgebildet, wobei der Querschnitt der Kühlmittelleitung eine Breite hat, welche vorzugsweise größer als ihre Höhe ist. Auf diese Weise wird eine möglichst große direkte Kontaktfläche zwischen der Kühlmittelleitung und der Außenseite der Fahrzeugbatterie bereitgestellt, wodurch kein separates Wärmeübertragungselement zwischen Kühlmittelleitung und Fahrzeugbatterie benötigt wird.

Beispielsweise können zwischen 35 % und 70 % der gekühlten Außenseite der Fahrzeugbatterie von Kühlmittelleitungen kontaktiert sein.

Eine verbesserte Isolierung der gekühlten Außenseite der Batterie kann realisiert werden, wenn zumindest ein Wärmeisolierungsbauteil vorgesehen ist, welches mit dem Anpresselement verbunden ist und eine Isolierung der gekühlten Außenseite der Batterie bildet.

Eine erfindungsgemäße Fahrzeugbatteriebaugruppe umfasst eine Fahrzeugbatterie, welche zumindest ein Batterieelement umfasst, und eine oben genannte Kühlvorrichtung, wobei die Kühlvorrichtung zwischen einer zu kühlenden Flachseite der Batterieelemente und einem Gehäuse der Fahrzeugbatterie angeordnet ist und die zumindest eine Kühlmittelleitung direkt an der zu kühlenden Flachseite der Batterieelemente anliegt. Diese Anordnung ermöglicht eine kompakte Ausbildung der Kühlvorrichtung. Ferner ermöglicht das Anpresselement der Kühlvorrichtung einen Toleranzausgleich zwischen dem Gehäuse der Fahrzeugbatterie und der zu kühlenden Flachseite der Batterieelemente.

Eine einfache Positionierung der Kühlvorrichtung in der Fahrzeugbatteriebaugruppe wird ermöglicht, indem das Gehäuse der Fahrzeugbatterie Vertiefungen und/oder Vorsprünge aufweist, welche eine Positionierung der Kühlvorrichtung, insbesondere der Anpresselemente relativ zum Gehäuse bewirken.

Ein erfindungsgemäßes Verfahren zur Herstellung einer Kühlvorrichtung für eine Fahrzeugbatterie mit einer zu kühlenden Außenseite umfasst die Verfahrensschritte: Bereitstellen eines Verstärkungsbauteils, insbesondere eines federelastischen Metallbauteils; Herstellen eines federelastischen Anpresselements als Verbundbauteil durch Umspritzen des Verstärkungsbauteils mit einem Kunststoffmaterial; und Anbringung einer Kühlmittelleitung am Verbundbauteil, wobei das Verbundbauteil bei Deformation senkrecht zur zu kühlenden Außenseite der Fahrzeugbatterie gegen die Kühlmittelleitung beaufschlagt wird. Die Batterie hat insbesondere eine ebene zu kühlende Außenseite.

Das Verstärkungsbauteil kann aus einem Metallblech gestanzt werden und vorzugsweise in eine gebogene Form umgeformt werden.

Ein einfaches und kostengünstiges Herstellungsverfahren wird ermöglicht, indem das Verbundbauteil durch Extrusion hergestellt wird, wobei das Verstärkungsbauteil in einer Extrusionsdüse mit Kunststoffmaterial umspritzt wird.

Um einen guten Verbund des Kunststoffmaterials mit dem Verstärkungsbauteil zu gewährleisten, kann das Verstärkungsbauteils vor dem Verbund mit dem Kunststoffmaterial mit einer Grundierung beschichtet werden.

Weitere Merkmale und Vorteile der Erfindung ergeben sich aus der nachfolgenden Beschreibung und aus den Zeichnungen, auf die Bezug genommen wird. In den Zeichnungen zeigen:
- Figur 1 eine erfindungsgemäße Fahrzeugbatteriebaugruppe in schematischer Ansicht;
- Figur 2 eine detaillierte Schnittansicht einer Kühlvorrichtung gemäß einer ersten Ausführungsform der Erfindung;
- Figur 3 eine Detailansicht der Kühlvorrichtung gemäß Figur 2;
- Figur 4 eine Schnittansicht einer Kühlvorrichtung gemäß einer zweiten Ausführungsform der Erfindung;
- Figur 5 eine Detailansicht einer alternativ ausgebildeten erfindungsgemäßen Kühlvorrichtung;
- Figur 6 eine erfindungsgemäße Fahrzeugbatteriebaugruppe mit zwei Anpresselementen gemäß Figur 4;
- Figur 7 eine perspektivische Ansicht eines Verstärkungsbauteils einer erfindungsgemäßen Kühlvorrichtung;
- Figur 8 eine Kühlvorrichtung gemäß einer dritten Ausführungsform der Erfindung im entspannten Zustand;
- Figur 9 die Kühlvorrichtung gemäß Figur 8 im vorgespannten Zustand; und
- Figur 10 eine Schnittansicht einer Kühlvorrichtung gemäß einer vierten Ausführungsform der Erfindung mit zwei Verstärkungsbauteilen.

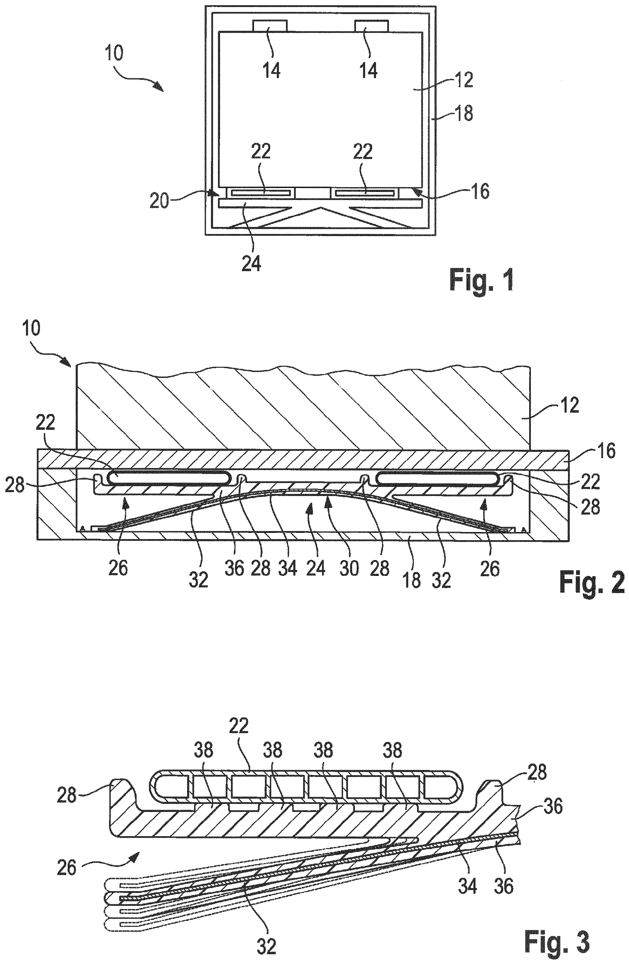

Figur 1 zeigt eine schematische Ansicht einer Fahrzeugbatteriebaugruppe 10 mit einer Fahrzeugbatterie 12, welche zumindest ein Batterieelement umfasst. An der Oberseite der Batterieelemente sind elektrische Kontakte 14 vorgesehen. Die flache Unterseite der Batterieelemente bildet eine zu kühlende Außenseite 16.

Ein Gehäuse 18 umgibt die Fahrzeugbatterie 12 sowie eine Kühlvorrichtung 20, die zur Kühlung der flachen Außenseite 16 der Batterieelemente vorgesehen ist.

Die Kühlvorrichtung 20 umfasst zwei Kühlmittelleitungen 22, die flach ausgebildet sind und mit ihren Flachseiten an der Außenseite 16 der Batterieelemente anliegen. Um einen wärmeleitenden Kontakt zwischen den Kühlmittelleitungen 22 und der Außenseite 16 sicherzustellen, ist ein separates Anpresselement 24 vorgesehen. Das Anpresselement 24 ist elastisch ausgebildet und stützt sich am Boden des Gehäuses 18 ab, wobei das Anpresselement 24 im montierten Zustand vorgespannt ist, um die Kühlmittelleitungen 22 gegen die Außenseite 16 der Fahrzeugbatterie 12 zu pressen.

Das Anpresselement 24 ist insbesondere so ausgebildet, dass Herstellungstoleranzen, die sich auf den Abstand zwischen der Außenseite 16 der Batterieelemente und dem Gehäuse 18 auswirken, ausgeglichen werden können.

Die Kühlvorrichtung 20 ist flach ausgebildet, wobei der für die Kühlvorrichtung 20 vorgesehene Bauraum zwischen der Außenseite 16 der Fahrzeugbatterie und dem Gehäuse 18 beispielsweise zwischen 1 und 5 cm beträgt. Herstellungstoleranzen von beispielsweise bis zu 10 % können durch das Anpresselement 24 der Kühlvorrichtung 20 kompensiert werden.

Eine erste Ausführungsform einer Fahrzeugbatteriebaugruppe 10 mit einer detaillierten Schnittansicht der Kühlvorrichtung 20 gemäß einer ersten Ausführungsform ist in Figur 2 gezeigt.

Das Anpresselement 24 weist zwei Aufnahmeabschnitte 26 auf, welche die Kühlmittelleitungen 22 aufnehmen. Die Aufnahmeabschnitte 26 sind im Wesentlichen starr ausgebildet und ermöglichen eine gute Kraftübertragung auf die Kühlmittelleitungen 22. In der ersten Ausführungsform sind die beiden Aufnahmeabschnitte 26 durch einen im Wesentlichen starr ausgebildeten zentralen Abschnitt 30 des Anpresselements 24 verbunden. Der zentrale Abschnitt 30 und die beiden Aufnahmeabschnitte bilden somit einen gemeinsamen starren Abschnitt des Anpresselements 24.

Die Aufnahmeabschnitte 26 umfassen jeweils zwei Positionierungsfortsätze 28, die eine seitliche Bewegung der Kühlmittelleitungen 22 relativ zum Anpresselement 24 begrenzen. Auf diese Weise verhindert das Anpresselement insbesondere eine Veränderung des Abstands zwischen den Kühlmittelleitungen 22.

Zwei federelastisch ausgebildete Schenkel 32 erstrecken sich ausgehend von den starr ausgebildeten Aufnahmeabschnitten 26 in einem flachen Winkel zur Ebene der gekühlten Außenseite 16 der Fahrzeugbatterie 12 in Richtung des Bodens des Gehäuses 18. Die federelastischen Schenkel 32 liegen mit ihren Enden am Gehäuse 18 an und sind in der montierten Anordnung der Fahrzeugbatteriebaugruppe 10 vorgespannt, sodass die Aufnahmeabschnitte 26 des Anpresselements 24 die Kühlmittelleitungen 22 gegen die zu kühlende Außenseite 16 der Fahrzeugbatterie 12 beaufschlagen.

Das Anpresselement 24 ist als Verbundbauteil ausgebildet, welches ein separat hergestelltes Verstärkungsbauteil 34 aufweist, das von einem Kunststoffmaterial 36 umgeben ist. In der ersten Ausführungsform ist das Verstärkungsbauteil 34 ein federelastisches Metallbauteil, beispielsweise aus Federstahl oder einer elastischen Aluminiumlegierung, welches eine kompakte Ausbildung der federelastischen Schenkel 32 des Anpresselements 24 mit guten und langlebigen elastischen Eigenschaften ermöglicht.

Das metallische Verstärkungsbauteil 34 ist ein Metallblech, welches im entspannten Zustand eine bogenförmige Gestalt hat. Auf diese Weise können beide federelastischen Schenkel 32 durch ein einziges Verstärkungsbauteil 34 gebildet werden.

Es ist auch möglich, dass mehrere Verstärkungsbauteile 34, die beispielsweise jeweils einem federelastisch ausgebildeten Schenkel 32 zugeordnet sind, vorgesehen sind.

Das das Verstärkungsbauteil 34 umgebende Kunststoffmaterial 36 weist eine geringere Wärmeleitfähigkeit als das Verstärkungsbauteil 34 auf. Auf diese Weise wird eine Wärmeübertragung durch Wärmeleitung über das Anpresselement 24 auf das Gehäuse 18 minimiert.

Das Kunststoffmaterial 36 bildet einerseits im Bereich der federelastisch ausgebildeten Schenkel 32 eine dünnwandige Beschichtung des Verstärkungsbauteils 34, welche eine federelastische Deformation der Schenkel 32 ermöglicht. Andererseits bildet das Kunststoffmaterial die im Wesentlichen starr ausgebildeten Aufnahmeabschnitte 26 sowie den zentralen Abschnitt 30 des Anpresselements 24 mit entsprechend starker Wandstärke.

Figur 3 zeigt eine Detailansicht des linken Aufnahmeabschnitts 26 und des linken federelastischen Schenkels 32 des Anpresselements 24 aus Figur 2. Der federelastische Schenkel 32 ist in vier unterschiedlich stark eingefederten Positionen gezeigt.

Im Aufnahmeabschnitt 26 sind Abstandsrippen 38 vorgesehen, die beispielsweise eine Höhe zwischen 0,1 und 0,5 mm und eine Breite zwischen 0,5 und 2 mm aufweisen. Der Freiraum zwischen benachbarten Abstandsrippen 38 beträgt zwischen 0,5 und 2 mm. Die Abstandsrippen 38 vermindern eine Wärmeübertragung zwischen der Kühlmittelleitung 22 und dem Anpresselement 24 durch Reduktion der Kontaktfläche.

Die Kühlmittelleitung 22 ist flach ausgebildet, wobei der Querschnitt der Kühlmittelleitung 22 eine Breite hat, welche größer ist als ihre Höhe. In der gezeigten Ausführungsform beträgt die Breite der Kühlmittelleitung 22 mehr als das Neunfache ihrer Höhe. Es können auch unterschiedliche Querschnitte der Kühlmittelleitung 22 vorgesehen sein, wobei der Querschnitt vorzugsweise eine Breite hat, welche zweimal, vorzugsweise fünfmal, weiter vorzugsweise zehnmal größer als seine Höhe ist.

Die Kühlmittelleitung 22 ist durch mehrere Stützwände in zahlreiche Kühlmittelkanäle unterteilt. Durch die Stützwände wird die mechanische Stabilität der flachen Kühlmittelleitung 22 erhöht. Die Kühlmittelleitung 22 bildet somit ein brettartiges Bauteil mit vorzugsweise mehreren Kühlmittelkanälen.

Für eine Gewichtsreduktion der Kühlvorrichtung 20 ist es dabei vorteilhaft, wenn die Wandstärke der Kühlmittelleitung 22 minimal ist und die Kühlmittelleitung 22 aus einem leichten Material, beispielsweise Aluminium, hergestellt ist, zum Beispiel durch Strangpressen.

Die Kühlmittelleitung 22 kann im nicht angepressten Zustand im Querschnitt nach oben konvex verlaufen. Im montierten Zustand wird die Kühlmittelleitung 22 durch die Anpresskraft des Anpresselements 24 flach an die Außenseite 16 der Fahrzeugbatterie 12 gedrückt.

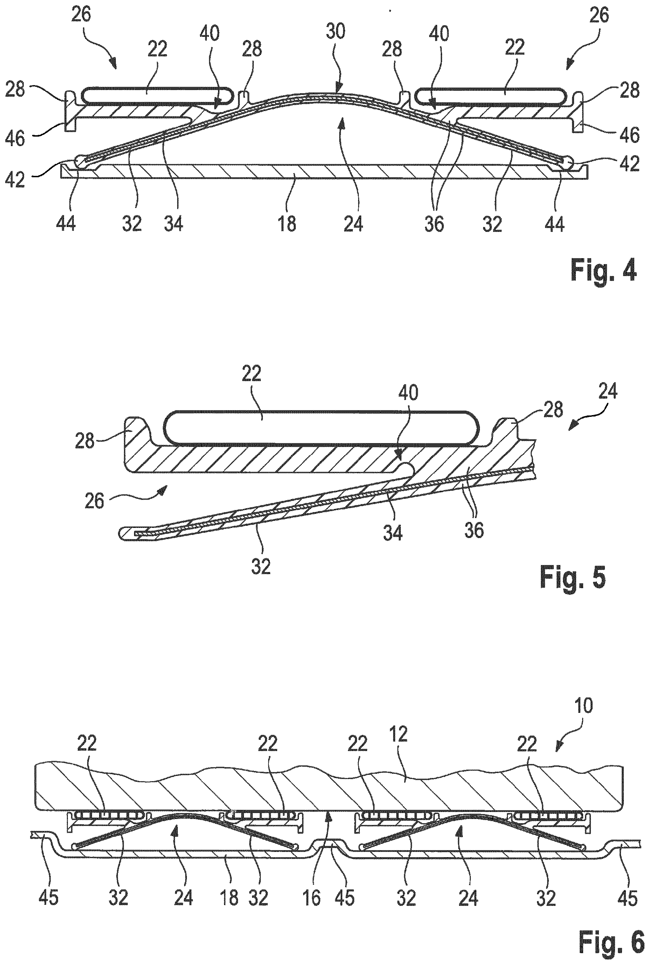

Figur 4 zeigt eine zweite Ausführungsform der Kühlvorrichtung 20, wobei das Anpresselement 24 lediglich im Bereich der Aufnahmeabschnitte 26 starr ausgebildet ist. Die beiden Schenkel 32 und der zentrale Abschnitt 30 zwischen den beiden Aufnahmeabschnitten 26 sind jeweils federelastisch ausgebildet.

Ein verformbarer Verbindungsabschnitt 40 ist zwischen den starr ausgebildeten Aufnahmeabschnitten 26 und dem federelastisch ausgebildeten Schenkel 32 beziehungsweise zentralem Abschnitt 30 vorgesehen. Der verformbare Verbindungsabschnitt 40 stellt sicher, dass die Aufnahmeabschnitte 26 ihre Ausrichtung relativ zur Außenfläche 16 der Fahrzeugbatterie 12 beibehalten, während sich die federelastisch ausgebildeten Schenkel 32 und der zentrale Abschnitt 30 elastisch verformen. Der verformbare Verbindungsabschnitt 40 wird durch eine Einbuchtung an der Oberseite des Anpresselements 24 und einer damit einhergehenden Verjüngung der Schichtdicke des Kunststoffmaterials 36 gebildet.

An den Enden der federelastisch ausgebildeten Schenkel 32 bildet das Kunststoffmaterial 36 einen ballenförmigen Fortsatz 42, mit dem das Anpresselement 24 am Gehäuse 18 anliegt. Durch die Ballenform des Fortsatzes 42 wird die Anlagefläche des Anpresselements 24 am Gehäuse 18 minimiert. Dies ist für die Reibung zwischen Anpresselement 24 und dem Boden des Gehäuses 18 bei Verformung der federelastischen Schenkel 32 sowie zur Minimierung der Wärmeübertragung zwischen Anpresselement 24 und Gehäuse 18 vorteilhaft.

Ferner sind die Enden der federelastischen Schenkel 32 in Vertiefungen 44 des Gehäusebodens 18 aufgenommen. Die Anordnung der Enden der Schenkel 32 in den Vertiefungen 44 des Gehäuses 18 ermöglicht eine einfache Positionierung der Kühlvorrichtung 20 relativ zum Gehäuse 18. Die Vertiefungen 44 sind langstreckt ausgebildet, um die Enden der Schenkel 32 auch bei maximaler elastischer Verformung in den Vertiefungen 44 aufzunehmen.

Im Bereich der Aufnahmeabschnitte 26 sind jeweils Fortsätze vorgesehen, die einen Anschlag 46 bilden, um eine Verformung der federelastischen Schenkel 32 zu begrenzen, wobei die Anschläge 46 bei der maximalen Verformung der federelastischen Schenkel 32 am Gehäuse 18 oder an den federelastisch ausgebildeten Schenkeln 32 anliegen.

Figur 5 zeigt eine Ausführungsvariante eines Anpresselements 24, wobei ein verformbarer Verbindungsabschnitt 40 durch eine Vertiefung an der Unterseite des Anpresselements 24 ausgebildet ist, und die Verjüngung des Querschnitts eine elastische Verformung des Verbindungsabschnitts 40 zulässt.

Figur 6 zeigt eine weitere Ausführungsform einer Fahrzeugbatteriebaugruppe 10, wobei zwei Anpresselemente 24 gemäß Figur 4 vorgesehen sind, die jeweils zwei Kühlmittelleitungen 22 an die Außenseite 16 der Fahrzeugbatterie 12 anpressen. Zur Positionierung der beiden Anpresselemente 24 sind entsprechende Vorsprünge 45 am Gehäuse 18 vorgesehen, zwischen denen die Schenkel 32 der Anpresselemente 24 am Gehäuse 18 anliegen.

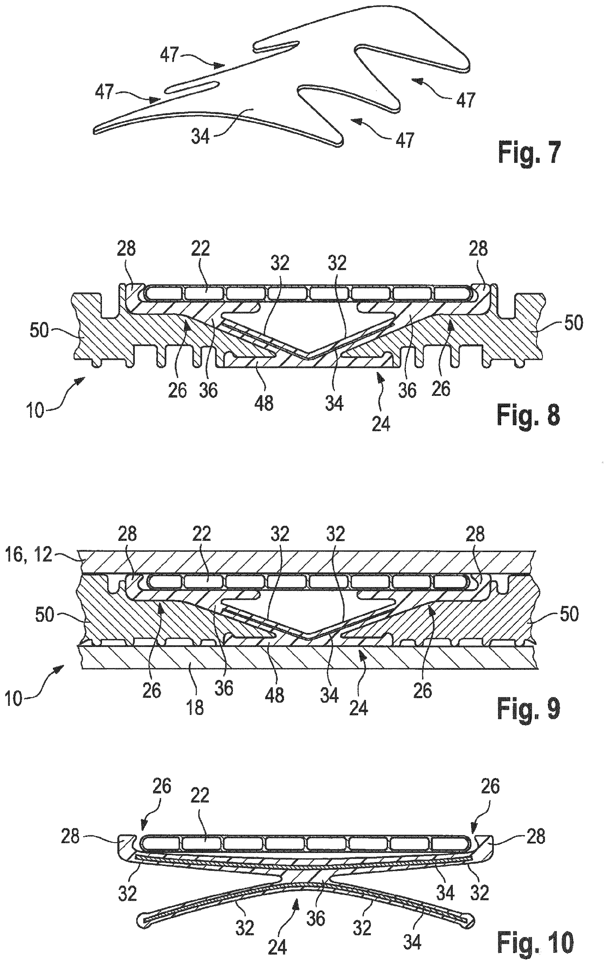

Figur 7 zeigt eine dreidimensionale perspektivische Ansicht des Verstärkungsbauteils 34. In der gezeigten Ausführungsform ist das Verstärkungsbauteil ein Metallblech, welches entlang einer Achse gebogen ist. Das Verstärkungsbauteil 34 ist bezüglich seines Querschnittsverlaufs in axialer Richtung heterogen ausgebildet. An den beiden Seitenrändern des Blechs sind Ausnehmungen 47 vorgesehen, die beispielsweise durch Stanzen hergestellt werden können.

Die Belastung der federelastischen Schenkel 32 des Anpresselements 24 ist insbesondere im Verbindungsbereich der starren Aufnahmeabschnitte 26 und der federelastischen Schenkel am stärksten. Um jedoch eine möglichst gleichmäßige Verformung des federelastischen Schenkels 32 zu ermöglichen und eine lokale Überbelastung zu vermeiden, weist der federelastische Schenkel 32 Bereiche mit heterogenem Widerstandsmoment auf.

In der gezeigten Ausführungsform werden die Bereiche mit heterogenem Widerstandsmoment durch die Ausnehmungen 47 des Verstärkungsbauteils 34 gebildet. Die Ausnehmungen 47 sind insbesondere dreiecksförmig mit abgerundeter Spitze.

Alternativ zum heterogenen Querschnittsverlauf des Verstärkungsbauteils 34 können Bereiche mit unterschiedlich dicker Kunststoffumspritzung vorgesehen sein, wobei das Widerstandsmoment in Bereichen mit dickerer Kunststoffumspritzung erhöht wird.

Eine dritte Ausführungsform eines Anpresselements 24 ist in den Figuren 8 und 9 gezeigt. Das Anpresselement 24 weist einen ebenen Bodenabschnitt 48 auf, von dem aus sich zwei federelastisch ausgebildete Schenkel 32 schräg aufwärts zur Kühlmittelleitung 22 erstrecken. An den Enden der Schenkel 32 liegt das Anpresselement 24 jeweils mit zwei Aufnahmeabschnitten 26 im Bereich von entgegengesetzten Seitenrändern an der Unterseite der flachen Kühlmittelleitung 22 an, wobei die Kühlmittelleitung 22 die Schenkel 32 brückenartig überspannt.

Ferner weisen die Aufnahmeabschnitte 26 an ihren Enden jeweils einen Positionierungsfortsatz 28 auf, welche die Kühlmittelleitung 22 jeweils an ihrem Seitenrand umgreifen und somit eine formschlüssige Verbindung zwischen Anpresselement 24 und Kühlmittelleitung 22 bilden.

Figur 8 zeigt eine Grundkonfiguration des Anpresselements 24, in der das Anpresselement 24 die Kühlmittelleitung 22 nicht gegen die flache Außenseite der Batterie 12 presst. In dieser Grundkonfiguration kann das Anpresselement 24 elastisch entspannt sein oder eine Vorspannung aufweisen, welche die Positionierungsfortsätze 28 des Anpresselements 24 gegen die Seitenwände der Kühlmittelleitung 22 beaufschlagt.

Es sind Wärmeisolierungsbauteile 50 vorgesehen, die aus einem deformierbaren und/oder komprimierbaren Schaummaterial gefertigt sind. Die beiden Wärmeisolierungsbauteile 50 sind jeweils formschlüssig mit dem Anpresselement 24 verbunden. Ein Vorsprung des Anpresselements 24 im Bereich des Bodenabschnitts 48 greift in das Wärmeisolierungsbauteil 50 ein. In der gezeigten Ausführungsform ist das Anpresselement 24 abschnittsweise in das Wärmeisolierungsbauteil 50 eingebettet.

Um eine Deformation des Wärmeisolierungsbauteils 50 zu erleichtern, sind Deformationsaussparungen an der Ober- und Unterseite des Wärmeisolierungsbauteils 50 vorgesehen. Die Deformationsaussparungen können auch zur gezielten Änderung des lokalen Deformationsverhaltens des Wärmeisolierungsbauteils 50 eingesetzt werden.

Kühlmittelleitung 22, Anpresselement 24 und die Wärmeisolierungsbauteile 50 bilden eine miteinander verbundene Baugruppe, die einen Kühlboden darstellt, dessen Gesamtfläche vorzugsweise der flachen Außenseite 16 der Fahrzeugbatterie 12 entspricht.

Figur 9 zeigt die Kühlvorrichtung 20 aus Figur 8, wobei die Kühlvorrichtung 20 in eine Fahrzeugbatteriebaugruppe 10 eingebaut ist und zwischen einem Batterieelement der Fahrzeugbatterie 12 und einem Gehäuse 18 angeordnet ist. Die Kühlvorrichtung 20 ist in ihrer Höhe komprimiert, wobei die Schenkel 32 des Anpresselements 24 in einer Anpresskonfiguration elastisch eingefedert sind und die Kühlmittelleitungen mit ihrer Oberseite mit einer bestimmten Anpresskraft gegen eine Flachseite 16 des Batterieelements pressen.

Gleichermaßen werden auch die Wärmeisolierungsbauteile 50 deformiert, insbesondere im Bereich der Deformationsaussparungen.

Die Anpresskraft, welche auf die Kühlmittelleitung 22 wirkt, wird einerseits durch die Federkonstante der deformierbaren Schenkel 32 des Anpresselements 24 und dem darin eingebetteten federelastischen Verstärkungsbauteil 34 sowie durch die Kompressibilität des Materials des Wärmeisolierungsbauteils 50 insbesondere im Bereich des Anpresselements 24 bestimmt.

Wie in Figur 9 zu erkennen ist, befinden sich die Fortsätze der Schenkel 32 in der Anpresskonfiguration nicht mehr im Eingriff mit den Seitenrändern der Kühlmittelleitung 22. Bei einer Entlastung des Anpresselements würden die Schenkel 32 jedoch wieder zurückfedern und die Positionierungsfortsätze erneut an den Seitenrändern der Kühlmittelleitung 22 angreifen. Auf diese Weise wird sichergestellt, dass die Kühlmittelleitung 22 mit dem Anpresselement 24 nicht im eingebauten Zustand der Kühlvorrichtung fest miteinander verbunden ist.

Figur 10 zeigt eine dritte Ausführungsform eines Anpresselements 24 mit zwei Verstärkungsbauteilen 34. Die beiden Verstärkungsbauteile 34 sind in Richtung senkrecht zur Ebene der Außenseite 16 der Fahrzeugbatterie 12 gestapelt angeordnet. Der Aufnahmeabschnitt 26 wird durch die beiden Positionierungsfortsätze 28 gebildet, welche die Seitenwände der Kühlmittelleitung 22 formschlüssig umschließen können. Das obere Verstärkungsbauteil 34 dient gleichzeitig zur mechanischen Versteifung des oberen Abschnitts des Anpresselements 24 zur Ausbildung des Aufnahmeabschnitts 26.

Unterschiedliche Merkmale der verschiedenen gezeigten Ausführungsformen können auch vorteilhaft miteinander kombiniert werden.

Ein Verfahren zur Herstellung einer Kühlvorrichtung 20 für eine Fahrzeugbatterie 12 wird im Folgenden beschrieben. In einem ersten Verfahrensschritt wird ein Verstärkungsbauteil 34 bereitgestellt, insbesondere ein federelastisches Metallbauteil. Dazu wird das Verstärkungsbauteil 34 aus einem Metallblech gestanzt und in eine gebogene Form umgeformt. Das fertiggestellte Verstärkungsbauteil 34 ist beispielsweise in Figur 10 gezeigt.

Anschließend wird das federelastische Anpresselement 24 als Verbundbauteil durch Umspritzen des Verstärkungsbauteils 34 mit einem Kunststoffmaterial 36 hergestellt. Das Verbundbauteil wird durch Extrusion hergestellt, wobei das Verstärkungsbauteil 34 in einer Extrusionsdüse mit Kunststoffmaterial 36 umspritzt, insbesondere komplett umspritzt wird.

Bei einem in axialer Richtung inhomogen ausgebildeten Verstärkungsbauteil, wie beispielsweise in Figur 10 gezeigt, werden die Ausnehmungen des Verstärkungsbauteils mit Kunststoffmaterial 36 aufgefüllt, wobei das Verbundbauteil in axialer Richtung eine im Wesentlichen gleichförmige Außengeometrie aufweist.

Um einen guten Verbund des Verstärkungsbauteils 34 mit dem Kunststoffmaterial 36 zu erreichen, wird das Verstärkungsbauteil vor dem Einführen in die Extrusionsdüse mit einer Grundierung beschichtet.

Abschließend wird die Kühlmittelleitung 22 am Verbundbauteil angebracht, wobei das Verbundbauteil bei Deformation senkrecht zur Ebene der zu kühlenden Außenseite der Fahrzeugbatterie gegen die Kühlmittelleitung beaufschlagt wird.

Zur Bildung der Fahrzeugbatteriebaugruppe 10 wird die Kühlvorrichtung 20 in das Gehäuse 18 eingesetzt und anschließend die Batterieelemente der Fahrzeugbatterie 12 eingesetzt. Da die Kühlvorrichtung 20 weder mit dem Gehäuse 18 noch mit der Batterie fest verbunden werden muss, ist eine flexible Montage und Demontage, beispielsweise bei einem Austausch der Kühlvorrichtung 20 oder Batterieelemente, auf einfache und flexible Weise möglich.

## Patentansprüche

1. Kühlvorrichtung (20) für eine Fahrzeugbatterie (12), wobei die Fahrzeugbatterie (12) von einem einen Boden aufweisenden Gehäuse (18) umgeben ist, mit zumindest einer Kühlmittelleitung (22) und zumindest einem separaten Anpresselement (24), welches elastisch ausgebildet ist, wobei das Anpresselement (24) im montierten Zustand zwischen einer Außenseite (16) der Fahrzeugbatterie (12) und dem Boden des Gehäuses (18) vorgespannt ist, und sich am Boden abstützt, um die Kühlmittelleitung (22) gegen die Außenseite (16) der Fahrzeugbatterie (12) zu pressen, wobei das Anpresselement (24) zumindest einen Aufnahmeabschnitt (26) aufweist, der die Kühlmittelleitung (22) aufnimmt,
**dadurch gekennzeichnet, dass**
das Anpresselement (24) als Verbundbauteil ausgebildet ist, welches ein separat hergestelltes Verstärkungsbauteil (34) aufweist, das von einem Kunststoffmaterial (36) derart umgeben ist, dass das Kunststoffmaterial (36) den Aufnahmeabschnitt (26) bildet.

2. Kühlvorrichtung nach Anspruch 1, **dadurch gekennzeichnet, dass** das das Verstärkungsbauteil (34) umgebende Kunststoffmaterial (36) eine geringere Wärmeleitfähigkeit als das Verstärkungsbauteil (34) aufweist.

3. Kühlvorrichtung nach Anspruch 1 oder 2, **dadurch gekennzeichnet, dass** das Verstärkungsbauteil (34) aus Metall ist.

4. Kühlvorrichtung nach Anspruch 3, **dadurch gekennzeichnet dass** das Verstärkungsbauteil (34) ein Metallblech ist welches vorzugsweise im entspannten Zustand eine bogenförmige Gestalt hat.

5. Kühlvorrichtung nach Anspruch 3 oder 4, **dadurch gekennzeichnet, dass** das metallische Verstärkungsbauteil (34) ein federelastisches Metallbauteil ist, vorzugsweise aus Federstahl oder einer elastischen Aluminiumlegierung.

6. Kühlvorrichtung nach einem der vorhergehenden Ansprüche, **dadurch gekennzeichnet dass** das Anpresselement (24) zumindest einen durch das von Kunststoffmaterial (36) umgebene Verstärkungsbauteil (34) gebildeten federelastischen Schenkel (32) aufweist.

7. Kühlvorrichtung nach Anspruch 6, **dadurch gekennzeichnet, dass** der federelastische Schenkel (32) Bereiche mit heterogenem Widerstandsmoment aufweist, um bei Belastung eine gleichmäßigere Verformung des federelastischen Schenkers (32) zu bewirken.

8. Kühlvorrichtung nach Anspruch 7, **dadurch gekennzeichnet, dass** das Verstärkungsbauteil (34) bezüglich seines Querschnittverlaufs heterogen ausgebildet ist und/oder Bereiche unterschiedlich dicker Kunststoffumspritzung (35) vorgesehen sind.

9. Fahrzeugbatteriebaugruppe (10) mit einer Fahrzeugbatterie (12), welche zumindest ein Batterieelement umfasst, und einer Kühlvorrichtung (20) gemäß einem der vorhergehenden Ansprüche, wobei die Kühlvorrichtung (20) zwischen einer zu kühlenden Außenseite (16) der Batterieelemente und einem Gehäuse (18) der Fahrzeugbatterie angeordnet ist und die zumindest eine Kühlmittelleitung (22) direkt an der zu kühlenden Außenseite (16) der Batterieelemente anliegt.

10. Fahrzeugbatteriebaugruppe (10) nach Anspruch 9, **dadurch gekennzeichnet dass** das Gehäuse (18) der Fahrzeugbatterie Vertiefungen (44) und/oder Vorsprünge (45) aufweist, weiche eine Positionierung der Kühlvorrichtung (20), insbesondere der Anpresselemente (24), relativ zum Gehäuse (18) bewirken.

11. Fahrzeugbatteriebaugruppe (10) nach Anspruch 9 oder 10 mit einer Kühlvorrichtung nach Anspruch 6, **dadurch gekennzeichnet, dass** der federelastische Schenkel (32) in einem flachen Winkel zur gekühlten Außenseite (16) der Fahrzeugbatterie (12) ausgebildet ist.

12. Fahrzeugbatteriebaugruppe (10) nach einem der Ansprüche 9 bis 11, **dadurch gekennzeichnet, dass** die Kühlmittelleitung (22) flach, mit einer im Wesentlichen zur angrenzenden Außenseite (16) der Fahrzeugbatterie komplementären Oberseite ausgebildet ist, wobei der Querschnitt der Kühlmittelleitung (22) eine Breite hat, welche vorzugsweise größer als ihre Höhe ist.

13. Fahrzeugbatteriebaugruppe (10) nach einem der Ansprüche 9 bis 12, **dadurch gekennzeichnet, dass** zumindest ein Wärmeisolierungsbauteil (50) vorgesehen ist welches mit dem Anpresselement (24) verbunden ist. und eine Isolierung der gekühlten Außenseite (16) der Batterie (12) bildet.

14. Fahrzeugbatteriebaugruppe (10) nach einem der vorhergehenden Ansprüche 9 bis 13, **dadurch gekennzeichnet, dass** zwischen 35 % und 70 % der gekühlten Außenseite (16) der Fahrzeugbatterie (12) von Kühlmitteleitungen (22) kontaktiert sind.

15. Verfahren zur Herstellung einer Kühlvorrichtung (20) für eine Fahrzeugbatterie (12) mit einer zu kühlenden Außenseite (16), gemäß einem der Ansprüche 1 bis 8, mit den Verfahrensschritten:
- Bereitstellen eines Verstärkungsbauteils (34), insbesondere federelastischen Metallbauteils;
- Herstellen eines federelastischen Anpresselements (24) als Verbundbauteil durch Umspritzen des Verstärkungsbauteils (34) mit einem Kunststoffmaterial (36); und
- Anbringung einer Kühlmittelleitung am Verbundbauteil (24), wobei das Verbundbauteil (24) bei Deformation senkrecht zur zu kühlenden Außenseite (16) der Fahrzeugbatterie gegen die Kühlmittelleitung (22) beaufschlagt wird.

16. Verfahren nach Anspruch 15, **dadurch gekennzeichnet, dass** das Verstärkungsbauteil (34) aus einem Blech gestanzt wird und vorzugsweise in eine gebogene Form umgeformt wird.

17. Verfahren nach Anspruch 15 oder 16, **dadurch gekennzeichnet, dass** das Verbundbauteil (24) durch Extrusion hergestellt wird, wobei das Verstärkungsbauteil (34) in einer Extrusionsdüse mit Kunststoffmaterial (36) umspritzt wird.

18. Verfahren nach einem der Ansprüche 15 bis 17, **dadurch gekennzeichnet, dass** das Verstärkungsbauteil (34) vor dem Verbund mit dem Kunststoffmaterial (36) mit einer Grundierung beschichtet wird.

## Claims

1. A cooling device (20) for a vehicle battery (12), wherein the vehicle battery (12) is surrounded by a housing (18) having a base, with at least one coolant line (22) and at least one separate pressing element (24) which is formed elastically, wherein the pressing element (24) in the mounted state is pre-tensioned between an outside (16) of the vehicle battery (12) and the base of the housing (18), and is supported on the base in order to press the coolant line (22) against the outside (16) of the vehicle battery (12), wherein the pressing element (24) has at least one receiving portion (26) which receives the coolant line (22),
**characterised in that**
the pressing element (24) is designed as a composite component which has a separately-produced reinforcing component (34) which is surrounded by a plastics material (36) in such a way that the plastics material (36) forms the receiving portion (26).

2. A cooling device according to Claim 1, **characterised in that** the plastics material (36) surrounding the reinforcing component (34) has a lower thermal conductivity than the reinforcing component (34).

3. A cooling device according to Claim 1 or Claim 2, **characterised in that** the reinforcing component (34) is made of metal.

4. A cooling device according to Claim 3, **characterised in that** the reinforcing component (34) is a metal sheet which preferably has an arcuate shape in the relaxed state.

5. A cooling device according to Claim 3 or Claim 4, **characterised in that** the metallic reinforcing component (34) is a resilient metal component, preferably made of spring steel or an elastic aluminium alloy.

6. A cooling device according to one of the preceding claims, **characterised in that** the pressing element (24) has at least one resilient arm (32) formed by the reinforcing component (34) which is surrounded by plastics material (36).

7. A cooling device according to Claim 6, **characterised in that** the resilient arm (32) has regions of heterogeneous section modulus, in order to effect more uniform deformation of the resilient arm (32) upon loading.

8. A cooling device according to Claim 7, **characterised in that** the reinforcing component (34) is formed heterogeneously with respect to its cross-sectional profile, and/or regions of different thickness of plastics-material encapsulation (35) are provided.

9. A vehicle battery module (10) with a vehicle battery (12) which comprises at least one battery element, and a cooling device (20) according to one of the preceding claims, wherein the cooling device (20) is arranged between an outside (16) of the battery elements which is to be cooled and a housing (18) of the vehicle battery, and the at least one coolant line (22) lies directly against the outside (16) of the battery elements which is to be cooled.

10. A vehicle battery module (10) according to Claim 9, **characterised in that** the housing (18) of the vehicle battery has depressions (44) and/or projections (45) which position the cooling device (20), especially the pressing elements (24), relative to the housing (18).

11. A vehicle battery module (10) according to Claim 9 or Claim 10, having a cooling device according to Claim 6, **characterised in that** the resilient arm (32) is formed at a shallow angle to the cooled outside (16) of the vehicle battery (12).

12. A vehicle battery module (10) according to one of Claims 9 to 11, **characterised in that** the coolant line (22) is formed flat, with an upper side substantially complementary to the adjoining outside (16) of the vehicle battery, the cross-section of the coolant line (22) being of a width which is preferably greater than its height.

13. A vehicle battery module (10) according to one of Claims 9 to 12, **characterised in that** at least one thermal insulation component (50) is provided which is connected to the pressing element (24) and forms insulation of the cooled outside (16) of the battery (12).

14. A vehicle battery module (10) according to one of the preceding Claims 9 to 13, **characterised in that** between 35% and 70% of the cooled outside (16) of the vehicle battery (12) is contacted by coolant lines (22).

15. A method for producing a cooling device (20) for a vehicle battery (12) with an outside (16) which is to be cooled, according to one of Claims 1 to 8,
having the method steps:
- providing a reinforcing component (34), especially resilient metal component;
- producing a resilient pressing element (24) as a composite component by encapsulating the reinforcing component (34) with a plastics material (36); and
- attaching a coolant line to the composite component (24), wherein the composite component (24) upon deformation perpendicular to the outside (16) of the vehicle battery which is to be cooled is urged against the coolant line (22).

16. A method according to Claim 15, **characterised in that** the reinforcing component (34) is cut from a metal sheet and preferably is shaped into a curved form.

17. A method according to Claim 15 or Claim 16, **characterised in that** the composite component (24) is produced by extrusion, with the reinforcing component (34) being encapsulated with plastics material (36) in an extrusion nozzle.

18. A method according to one of Claims 15 to 17, **characterised in that** the reinforcing component (34) is coated with a primer prior to being joined with the plastics material (36).

## Revendications

1. Dispositif de refroidissement (20) d'une batterie de véhicule (12), la batterie (12) étant entourée par un boîtier (18) comportant un fond, comprenant au moins une conduite de fluide de refroidissement (22) et au moins un élément de serrage (24) séparé qui est réalisé élastiquement, l'élément de serrage (24) étant précontraint à l'état monté entre la face externe (16) de la batterie (12) et le fond du boîtier (18), et s'appuyant sur le fond pour comprimer la conduite de fluide de refroidissement (22) contre la face externe (16) de la batterie (12), l'élément de serrage (24) comprenant au moins un segment de réception (26) de la conduite de fluide de refroidissement (22),
**caractérisé en ce que**
l'élément de serrage (24) est réalisé sous la forme d'un élément composite qui comporte un élément de renfort (34) fabriqué séparément qui est entouré par un matériau synthétique (36) de sorte que le matériau synthétique (36) forme le segment de réception (26).

2. Dispositif de refroidissement conforme à la revendication 1,
**caractérisé en ce que**
le matériau synthétique (36) entourant l'élément de renfort (34) a une conductibilité thermique inférieure à celle de l'élément de renfort (34).

3. Dispositif de refroidissement conforme à la revendication 1 ou 2,
**caractérisé en ce que**
l'élément de renfort (34) est réalisé en métal.

4. Dispositif de refroidissement conforme à la revendication 3,
**caractérisé en ce que**
l'élément de renfort (34) est une tôle métallique qui a de préférence à l'état détendu une configuration en forme d'arc.

5. Dispositif de refroidissement conforme à la revendication 3 ou 4,
**caractérisé en ce que**
l'élément de renfort métallique (34) est un élément métallique élastiquement déformable, de préférence en acier à ressorts ou en un alliage d'aluminium élastique.

6. Dispositif de refroidissement conforme à l'une des revendications précédentes,
**caractérisé en ce que**
l'élément de serrage (24) comporte au moins une branche (32) élastiquement déformable formé par l'élément de renfort (34) entourée par le matériau synthétique (36).

7. Dispositif de refroidissement conforme à la revendication 6,
**caractérisé en ce que**
la branche élastiquement déformable (32) comporte des zones ayant des couples résistants hétérogènes pour permettre d'obtenir en cas de charge une déformation uniforme de la branche élastiquement déformable (32).

8. Dispositif de refroidissement conforme à la revendication 7,
**caractérisé en ce que**
l'élément de renfort (34) est réalisé de manière hétérogène concernant les variations de sa section et/ou des zones d'injection de matériau synthétique d'épaisseurs différentes (35) sont prévues.

9. Ensemble de batterie de véhicule (10) comprenant une batterie de véhicule (12) qui comporte au moins un élément de batterie et un dispositif de refroidissement (20) conforme à l'une des revendications précédentes, le dispositif de refroidissement (20) étant monté entre la face externe (16) à refroidir de l'élément de batterie et le boîtier (18) de la batterie du véhicule, et, la conduite de fluide de refroidissement (22) s'appliquant directement sur la face externe (16) à refroidir de l'élément de batterie.

10. Ensemble de batterie de véhicule (10) conforme à la revendication 9,
**caractérisé en ce que**
le boîtier (18) de la batterie du véhicule comporte des cavités (44) et/ou des saillies (45) qui permettent le positionnement du dispositif de refroidissement (20) en particulier des éléments de serrage (24) par rapport au boîtier (18).

11. Ensemble de batterie de véhicule (10) conforme à la revendication 9 ou 10,
comprenant un dispositif de refroidissement conforme à la revendication 6,
**caractérisé en ce que**
la branche élastiquement déformable (32) est réalisée avec un angle plan par rapport à la face externe à refroidir (16) de la batterie (12) du véhicule.

12. Ensemble de batterie de véhicule (10) conforme à l'une des revendications 9 à 11,
**caractérisé en ce que**
la conduite de fluide de refroidissement (22) est plane et a une face supérieure essentiellement complémentaire de la face externe adjacente (16) de la batterie du véhicule, la section de la conduite de fluide de refroidissement (22) ayant une largeur qui est de préférence supérieure à sa hauteur.

13. Ensemble de batterie de véhicule (10) conforme à l'une des revendications 9 à 12,
**caractérisé en ce qu'**
il est prévu au moins un élément d'isolation thermique (50) qui est relié à l'élément de serrage (24) et forme une isolation de la face externe (16) refroidie de la batterie (12).

14. Ensemble de batterie de véhicule (10) conforme à l'une des revendications précédentes,
**caractérisé en ce qu'**
entre 35% et 70% de la face externe (16) refroidie de la batterie du véhicule (12) est en contact avec des conduites de fluide de refroidissement (22).

15. Procédé d'obtention d'un dispositif de refroidissement (20) d'une batterie de véhicule (12) ayant une face externe (16) à refroidir conforme à l'une des revendications 1 à 8, comprenant les étapes suivantes consistant à :
se procurer un élément de renfort (34) en particulier un élément métallique élastiquement déformable,
fabriquer un élément de serrage élastiquement déformable (24) sous la forme d'un élément composite en injectant un matériau synthétique (36) autour de l'élément de renfort (34), et
monter une conduite de fluide de refroidissement sur l'élément composite (24), l'élément composite (24) étant rappelé, contre la conduite de fluide de refroidissement (22) par déformation perpendiculairement à la face externe (16) à refroidir de la batterie du véhicule.

16. Procédé conforme à la revendication 15,
**caractérisé en ce que**
l'élément de renfort (34) est estampé à partir d'une tôle et est de préférence déformé selon une forme courbe.

17. Procédé conforme à la revendication 15 ou 16,
**caractérisé en ce que**
l'élément composite (24) est obtenu par extrusion, l'élément de renfort (34) étant entouré de matériau synthétique (36) par injection dans une buse d'extrusion.

18. Procédé conforme à l'une des revendications 15 à 17,
**caractérisé en ce que**
l'élément de renfort (34) est revêtu d'un apprêt avant sa liaison avec le matériau synthétique (36).
